## Europäisches Patentamt

## European Patent Office

## Office européen des brevets

(19)

(11) Numéro de publication: **0 242 262 B1**

(12) **FASCICULE DE BREVET EUROPEEN**

(45) Date de publication du fascicule du brevet:
**05.09.90**

(51) Int. Cl.⁵: **G01V 1/147**

(21) Numéro de dépôt: **87400731.3**

(22) Date de dépôt: **03.04.87**

(54) **Dispositif pour engendrer des ondes acoustiques par percussion d'une masse chutant sur un element cible ancre dans un puits.**

(30) Priorité: **11.04.86 FR 8605333**

(43) Date de publication de la demande:
**21.10.87 Bulletin 87/43**

(45) Mention de la délivrance du brevet:
**05.09.90 Bulletin 90/36**

(84) Etats contractants désignés:
**BE DE GB IT NL**

(56) Documents cités:
**US-A- 3 193 046**
**US-A- 3 209 854**

(73) Titulaire: **INSTITUT FRANCAIS DU PETROLE, 4, Avenue de Bois-Préau, F-92502 Rueil-Malmaison(FR)**

(72) Inventeur: **Magneville, Pierre, 43, rue Eugène Bourdillon, F-78540 Vernouillet(FR)**

ACTORUM AG

## Description

La présente invention a pour objet un dispositif pour engendrer des ondes acoustiques par percussion d'une masse chutant sur un élément-cible couplé avec la paroi d'un puits ou d'un forage, utilisable en particulier dans le domaine de la prospection sismique terrestre.

On connaît un dispositif pour engendrer des impulsions sismiques par percussion d'une masse sur un élément-cible ancré dans un forage. L'élément-cible est solidaire d'un corps allongé qui est pourvu de moyens d'ancrage.

La masse est déplaçable dans le corps entre une position basse en contact avec l'élément-cible et une position haute d'où sa chute est déclenchée par action de moyens de manoeuvre. Ces moyens comportent un élément à crochets escamotables susceptible de venir saisir une pièce d'accrochage solidaire de la masse et des éléments de traction rigides (tiges ou train de tiges interconnectées) connectés à des moyens de levage disposés à l'extérieur du puits. Les moyens d'ancrage sont du type "packer" bien connus des spécialistes et comportent un organe expansible constitué d'une partie périphérique déplaçable radialement et d'une partie centrale.

L'expansion est obtenue en faisant tourner les deux parties l'une par rapport à l'autre par une rotation du train de tiges depuis la surface. La partie périphérique peut être constituée de bras pivotants munis de griffes qui, en s'ouvrant, viennent s'ancrer dans la paroi du puits, ou bien encore d'une enceinte déformable. Compte-tenu du mode de fonctionnement du dispositif, les contraintes radiales sont exercées sur les moyens d'ancrage alternativement vers le haut et vers le bas.

Vers le haut, lorsque la masse est remontée par traction sur le train de tiges, en raison des frottements et de la pression hydrostatique régnant dans le puits. Vers le bas, au moment des impacts de la masse sur l'élément-cible. Avec les moyens d'ancrage du type "packer" utilisés dans la pratique, l'immobilisation du corps est obtenue par coincement de bras d'ancrage contre la paroi du puits et les positions des moyens d'ancrage où ceci se produit ne sont pas en général identiques selon que l'on descend ou que l'on remonte le corps. Il s'ensuit que l'ensemble subit un déplacement au cours d'un même cycle de fonctionnement, ce qui a pour effet d'endommager les parois et de diminuer le coefficient de couplage.

En outre, la puissance acoustique émise par cette source dépend de la hauteur de chute de la masse. Pour certaines applications où la puissance acoustique requise est grande, une hauteur de chute de plusieurs mètres peut être nécessaire. La hauteur totale du dispositif peut donc être très importante, ce qui parfois le rend difficile à manœuvrer. Le dispositif antérieur fait l'objet de la demande de brevet français publiée 2 590 994.

Par le brevet U.S-A 3 193 046, on connaît une source sismique de surface à impact comportant un élément-cible posé sur le sol et une masse guidée, accélérée par un ressort et qui vient heurter l'élément-cible en fin de chute. Pour hisser la masse jusqu'à sa position de déclenchement, le dispositif comporte une tige filetée terminée par un manchon à baïonnette adapté à venir s'emboîter sur une tête solidaire de l'élément-cible. Par des engrenages coniques tournants associés à des moyens moteurs, on obtient une translation de la tige filetée. Le dispositif comporte encore un agencement pour dégager le manchon à baïonnette de la tête quand la masse arrive en position haute, cet agencement comportant des moyens hydrauliques pour faire tourner sur elle-même la tige filetée. Le déplacement de la masse dans le dispositif antérieur, est donc obtenu par des moyens d'accrochage agissant par en-dessus, ce qui nécessite l'emploi d'un système complexe pour faire pivoter alternativement dans un sens puis dans le sens opposé le manchon d'accrochage. Le dispositif antérieur est bien adapté à un fonctionnement en surface sous le contrôle direct d'un opérateur. De par sa complexité, il convient peu pour un usage dans un puits hors du contrôle direct de l'opérateur.

Le dispositif selon l'invention permet d'engendrer dans un puits ou forage des ondes acoustiques par percussion d'une masse chutant sur un élément-cible couplé avec la paroi du puits. Il comporte un corps allongé auquel est fixé l'élément-cible, le corps assurant le guidage de la masse entre une position d'impact en contact avec l'élément-cible et une position de relevage d'où la chute est déclenchée, des moyens de liaison pour relier le corps à la surface, des moyens d'ancrage escamotables pour coupler par intermittence le dispositif avec la paroi du puits, des moyens pour translater la masse entre sa position d'impact et sa position de relevage, ces moyens comportant une tige filetée disposée suivant l'axe du corps, des moyens pour faire tourner la tige filetée alternativement dans un sens et dans le sens opposé, et des moyens pour appliquer à la masse une force élastique qui vient s'ajouter à la force de pesanteur. Il est caractérisé en ce que les moyens pour translater la masse comportent un écrou immobilisé en rotation qui est disposé sous la masse et coopère avec la tige filetée.

Les moyens pour faire tourner la tige filetée peuvent comporter par exemple des éléments rigides reliant la tige filetée à des moyens moteurs disposés en surface. Ils peuvent aussi comporter des moyens moteurs solidaires du corps et adaptés à être descendus avec lui dans le puits, à l'extrémité d'un câble électro-porteur alimenté depuis une installation de surface.

Les moyens pour appliquer à la masse une force s'ajoutant à la force de pesanteur comportent par exemple un ressort ou bien encore une chambre contenant un fluide, délimitée par des parois du corps et un piston mobile solidaire de la masse.

L'utilisation de moyens de translation de la masse consistant essentiellement en un écrou qui vient soulever la masse lorsqu'il est déplacé par la rotation d'une tige, a pour effet de supprimer les contraintes axiales qui, dans le dispositif antérieur premier cité, étaient dirigées vers le haut. Les seules contraintes axiales qui s'exercent sur les moyens d'ancrage sont celles qui résultent des impacts. Il en résulte un meilleur couplage du dispositif avec la paroi du puits et une meilleure stabilité pendant les cycles d'émission et de réarmement. Cela conduit en outre à une réalisation simplifiée.

La remontée de la masse étant obtenue par une poussée par en dessous obtenue par translation de l'écrou conduit à une réalisation plus simple bien adaptée à un fonctionnement dans un puits.

L'utilisation de moyens pour accroître la vitesse de chute de la masse permet de réduire la course nécessaire, pour une même énergie acoustique produite et par conséquent de raccourcir le dispositif.

Le mode de réalisation où les moyens moteurs pour la mise en rotation de la tige filetée, sont aussi descendus dans le puits et alimentés par l'intermédiaire d'un câble électro-porteur déroulé d'un touret, est particulièrement avantageux lorsque la profondeur d'utilisation devient importante dans la mesure où il permet une accélération des manœuvres de descente et de mise en place.

Le dispositif comporte également des moyens d'immobilisation de la masse en position de relevage, ces moyens étant déclenchés par le retour de l'écrou au voisinage de la position d'impact de la masse.

Il peut comporter également des moyens d'immobilisation de la masse comprenant un plateau pourvu de moyens magnétiques.

D'autres caractéristiques et avantages du dispositif selon l'invention apparaîtront à la lecteur de la description de deux modes de réalisation particuliers, donnés à titre d'exemples non limitatifs et en se référant aux dessins annexés où:

— la figure 1 représente schématiquement le dispositif à l'intérieur d'un puits, suivant un premier mode de réalisation;

— la figure 2 est une vue en coupe partielle du dispositif où la masse est en position d'impact contre l'élément-cible et l'écrou maintient escamotée une barre de blocage constituant un premier mode de réalisation des moyens d'immobilisation;

— la figure 3 représente schématiquement le dispositif en coupe transversale;

- la figure 4 est une vue transversale schématique de l'écrou;

- la figure 5 est une vue analogue à la figure 2 montrant la masse dans une position intermédiaire et les moyens mécaniques d'immobilisation de la masse sont en position avancée;

- la figure 6 montre le dispositif dans sa position de délenchement où la masse est soutenue dans une encoche de la barre de blocage et où l'écrou est revenu au voisinage de sa position basse d'engagement avec une gâchette de déclenchement;

- la figure 7 représente un second mode de réalisation du dispositif comportant des moyens moteurs électriques pour faire tourner la tige filetée; et

- la figure 8 est une vue en coupe partielle de l'intérieur du corps montrant notamment les moyens magnétiques d'immobilisation par intermittence de la masse en position haute.

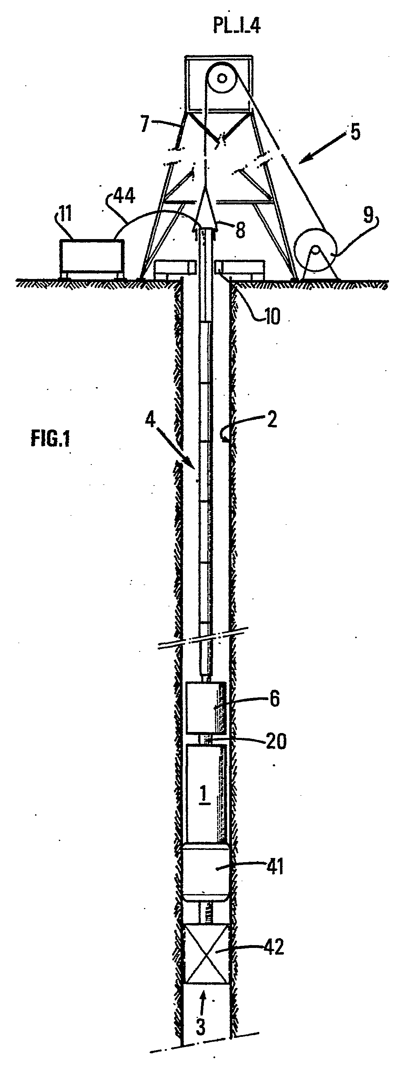

Le dispositif représenté à la figure 1 comporte un ensemble de percussion 1 destiné à être descendu dans un puits ou un forage 2, un élément de couplage 3 pour immobiliser l'ensemble de percussion à une profondeur choisie, une colonne rigide 4 constituée d'une tige ou d'un train de tiges interconnectées pour supporter la structure ainsi formée et le relier à un système de manoeuvre 5 disposé en surface, et un boîtier de transmission 6 d'un type connu interposé entre la colonne 4 et l'ensemble de percussion 1 et dont la fonction sera précisée plus loin. Le système de manoeuvre 5 est d'un type connu dans le domaine du forage et comporte par exemple un derrick 7, des moyens d'accrochage 8 de la colonne, reliés par des câbles à un système de levage 9 et une table de rotation 10 associée à des moyens moteurs (non représentés) pour entraîner en rotation la colonne 4.

L'élément de couplage 3 est du type "packer" bien connu également dans le domaine du forage. On utilise par exemple un "packer" pourvu d'une enceinte déformable qui peut être dilatée par injection d'un liquide sous pression. Ce liquide est transmis à l'enceinte déformable depuis la surface par l'intermédiaire de la colonne tubulaire 4. Le liquide sous pression est fourni par un système hydraulique 11 également d'un type connu.

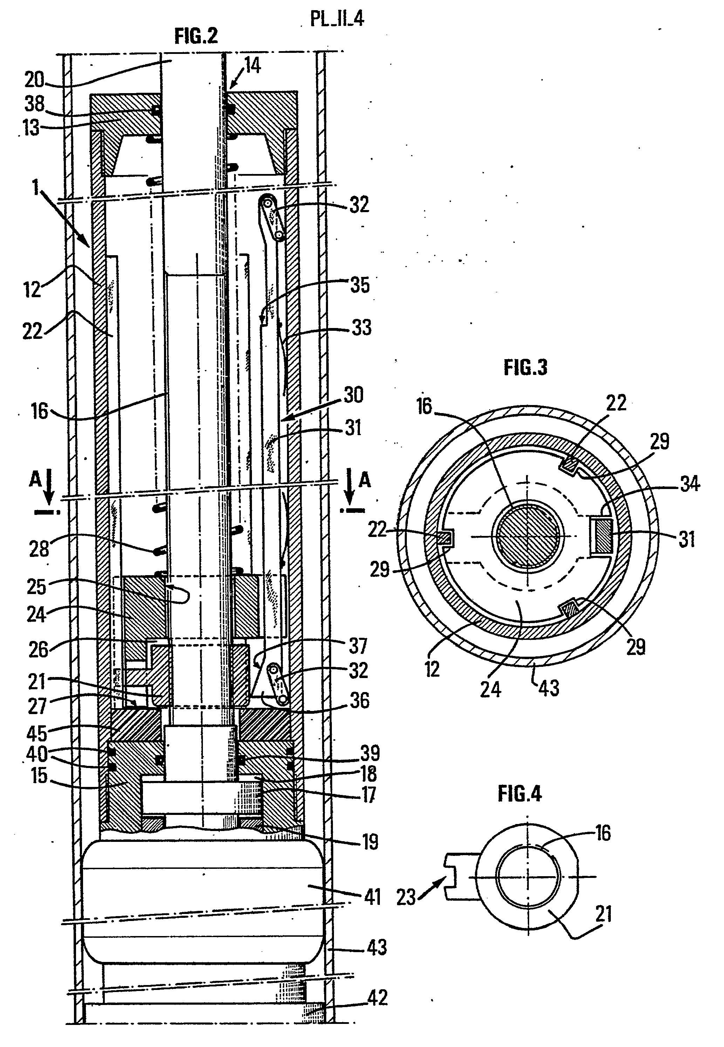

L'ensemble de percussion 1 comporte (Fig. 2 à 5) un corps cylindrique 12 terminé à une première extrémité par une paroi 13 pourvue d'une ouverture axiale 14 et fermé à son extrémité opposé par une pièce rapportée 15 qui constitue l'élément-cible ou enclume. Une tige filetée 16 est disposée suivant l'axe longitudinal du corps 1. Elle comporte une tête 17 pouvant tourner librement sur elle-même dans une cavité 18 de l'élément-cible et rendue solidaire de celui-ci en translation par des moyens de fixation 19.

· Elle traverse l'ouverture 14 à la première extrémité du corps et se raccorde à l'axe de sortie 20 du boîtier de transmission 6 (Fig. 1). Sur commande issue de l'installation de surface, le boîtier 6 peut soit transmettre le mouvement de rotation de la colonne 4, soit l'inverser. Selon le cas, l'arbre de sortie 20 du boîtier de transmission 6 peut donc faire tourner la tige 16 soit dans un sens soit dans le sens opposé.

Sur la tige filetée 16 vient se visser un écrou 21. Des glissières 22 (Fig. 3) sont fixées à la paroi intérieure du corps suivant des génératrices de celui-ci. L'écrou 21 comporte au moins une encoche radiale 23 adaptée à venir s'appuyer sur une des glissières 22, ce qui l'empêche de tourner sur lui-même. La rotation de la tige filetée 16 dans un sens puis dans le sens opposé fait monter l'écrou et le fait descendre. Du côté de l'écrou opposé à l'élément-cible 15, est disposé une masse 24 (ou marteau) constitué d'une pièce cylindrique pourvue suivant son axe longitudinal d'un alésage 25 de section supérieure à celle de la tige filetée 16.

La masse comporte un évidement 26 de dimensions supérieures à celles de l'écrou. De cette manière, sa face inférieure 27 peut venir librement en contact de la paroi en regard de l'élément-cible 15 lorsque l'écrou 21 est ramené en position basse au voisinage de celui-ci. A l'intérieur du corps, entre la face opposée (ou supérieure) de la masse et la paroi extrême 13, est disposé un ressort 28 qui est comprimé lorsque l'on éloigne la masse de l'élément-cible. La masse 24 comporte également des encoches 29 pour les glissières 22 qui la guident dans ses déplacements à l'intérieur du corps.

Le dispositif comporte également des moyens escamotables 30 d'immobilisation de la masse dans une position de déclenchement où le ressort 28 est fortement comprimé, ces moyens étant commandés par les déplacements de la masse et de l'écrou à l'intérieur du corps 12. Ils comportent une barre 31 disposée suivant une génératrice du corps, à l'intérieur de celui-ci, qui s'appuie à sa base sur l'élément-cible 15. Deux bras 32 parallèles et d'égale longueur relient la barre 31 au voisinage de ses extrémités, à la paroi intérieure du corps.

Des ressorts 33 sont disposés entre la paroi du corps et la barre, pour les maintenir écartées l'une de l'autre, en l'absence de poussée radiale. La masse est pourvue d'une rainure 34 (Fig. 3) au fond de laquelle la barre vient s'appuyer. Une encoche 35 est ménagée dans celle-ci en face de la position de déclenchement ou position haute de la masse 24. La profondeur de la rainure 34 et celle de l'encoche 35 sont choisies de manière que la barre soit maintenue écartée par la masse, avec les ressorts 33 comprimés, sauf lorsque celle-ci atteint sa position haute et s'engage dans ladite encoche 35.

Le déclenchement de la masse est assuré par action de l'écrou 21 sur la barre 31. Celle-ci est pourvue d'une embase élargie 36 dont la paroi supérieure 37 est inclinée vers le haut, qui sert de gâchette.

Les dimensions sont choisies de manière que l'écrou 21, au voisinage immédiat de l'élément-cible 15, vienne s'appuyer contre la paroi inclinée 37 de la gâchette et repousser la barre 31 vers sa position de retrait assez loin pour que la masse soit dégagée de l'encoche 35 de retenue.

Des joints d'étanchéité 38, 39, 40 sont disposés dans la paroi terminale 13 et dans l'élément-cible 15, autour de la tige filetée 16, et aussi entre la paroi du corps et l'élément-cible, pour isoler du puits l'intérieur du corps.

A sa base, l'élément-cible est solidaire d'un élément de couplage déformable 41, lui-même relié à un élément d'ancrage du type "packer" 42. L'élément d'ancrage 42 comporte par exemple une enceinte à volume variable qui est appliquée contre la paroi du puits (cas de la figure 1) ou contre la paroi d'un tubage 43, lorsque le dispositif est descendu dans un forage tubé (cas des figures 2, 5 et 6), par injection d'un liquide sous pression fourni par le système hydraulique 11 (cf. Fig. 1) par l'intermédiaire de canalisation 44 et de la colonne tubulaire 4.

La section de l'élément de couplage déformable 41 est choisie de manière qu'il vienne s'appliquer étroitement contre la paroi du puits ou du tubage 43 lorsque, l'élément d'ancrage ayant été dilaté, les poids du dispositif et de la colonne 4 lui est appliqué. Cet élément de couplage peut être constitué d'une enceinte remplie de liquide ou bien encore être réalisé sous la forme d'un bouchon en matériau élastique disposé entre deux plaques dont on fait varier l'écartement par rotation d'un tige filetée.

Un disque 45 réalisé en un matériau amortisseur tel que du polyuréthane par exemple, est disposé avantageusement sur la paroi supérieure de l'élément-cible de manière à amortir les impacts de la masse 24.

Le dispositif fonctionne de la manière suivante :

- L'élément d'ancrage 42 est actionné de manière à immobiliser le dispositif à une profondeur déterminée où il doit être déclenché.

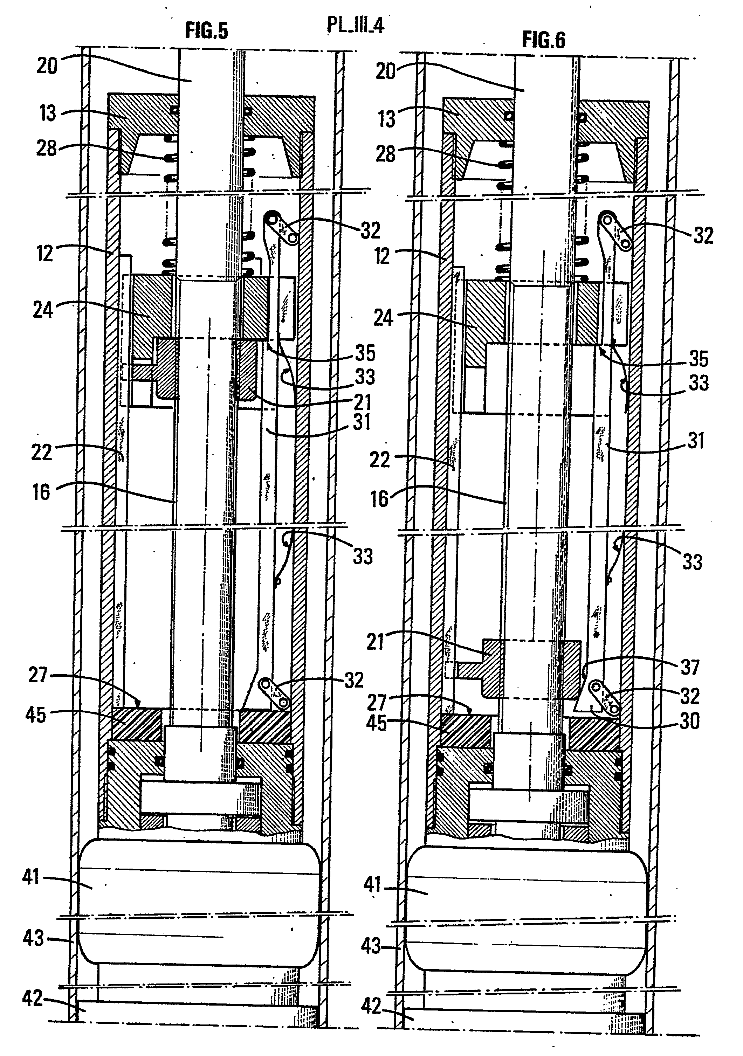

- Le boîtier de transmission 6 (Fig. 1) étant commandé pour assurer une transmission directe, on actionne les moyens moteurs de manière à entraîner en rotation la table tournante 10 et par conséquent la colonne 4, l'arbre de sortie 20 et, la tige filetée 16. L'écrou 21 immobilisé en rotation par au moins une des glissières 22, se déplace vers le haut, c'est-à-dire vers la paroi terminale 13 du corps, depuis sa position basse représentée à la figure 1, et entraîne la masse dans son déplacement. En quitant cette position basse, il cesse d'appuyer sur la gâchette 36 et les ressorts 33 rappellent la barre 31 vers sa position d'écartement (Fig. 5). Elle vient alors s'appuyer contre le fond de la rainure 34 ménagée dans la masse.

- La masse arrive en position haute ou position de déclenchement représentée à la figure 5, au niveau de l'encoche 35 de la barre 31. Sous l'action des ressorts de rappel 33 la barre s'écarte de la paroi et son encoche 35 vient s'engager sous la masse, ce qui la maintient en position haute.

- On commande le boîtier de transmission 6 de manière à inverser le sens de rotation de l'arbre de sortie 20 et l'on actionne de nouveau la table 10 pour faire tourner la colonne 4. L'inversion du sens de rotation fait descendre l'écrou 21 qui retourne vers sa position basse, laissant la masse suspendue dans l'encoche 35 de la barre 31.

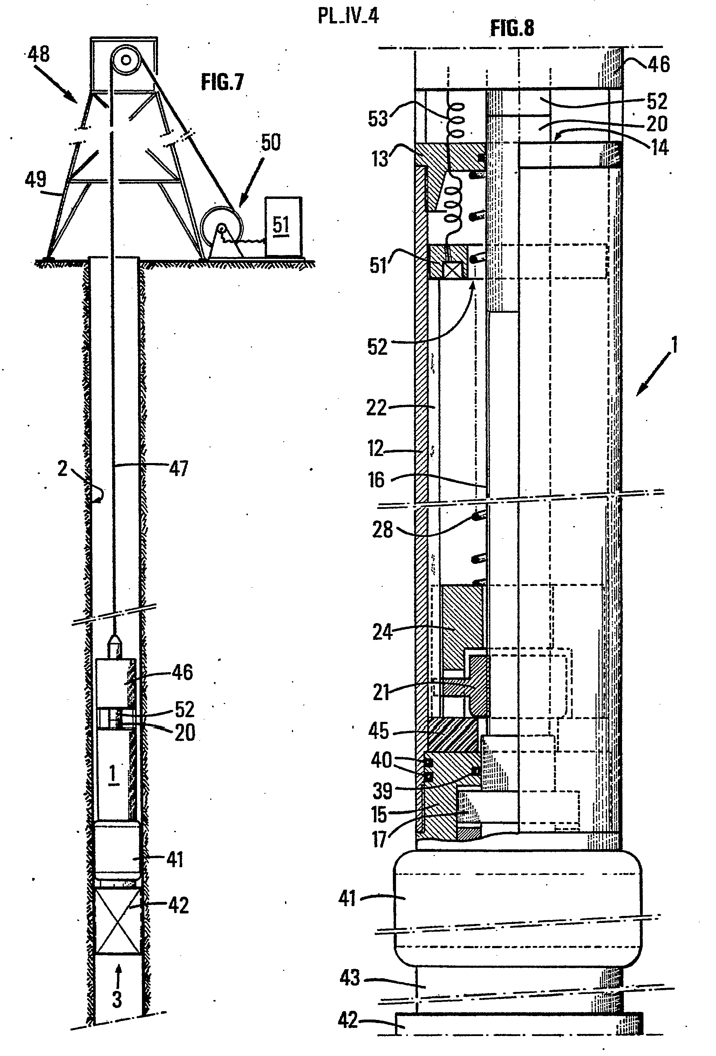

- Lorsque l'écrou est revenu au voisinage de sa position basse (Fig. 6) il arrive en contact de la surface 37 de la gâchette 36 et l'écarte latéralement. Lorsque l'écartement est suffisant, la masse se décroche de l'encoche supérieure 35 et retombe, propulsée par le ressort 28, vers sa position basse ou position d'impact où elle vient heurter l'élément-cible avec force. Une impulsion axiale est appliquée à l'élément de couplage 41. Celui-ci étant réalisé en un matériau élastique et donc sensiblement incompressible, la compression axiale résultant de l'impact est traduite par une dilatation radiale concommittante.

Une impulsion sismique radiale est donc appliquée aux formations environnant le puits. Un autre cycle d'émission peut alors commencer.

Dans le cas où l'élément d'ancrage ou "packer" est du type à enceinte dilatable, il peut assurer à lui seul le couplage acoustique du dispositif avec les parois du puits et dans ce cas on peut éventuellement supprimer l'élément de couplage 41. Mais celui-ci s'avère indispensable si l'on connecte le dispositif à un élément d'ancrage d'un type différent dont la surface d'ancrage est trop réduite pour assurer à elle seule un couplage acoustique suffisant. Cela peut être le cas notamment de certains packers à griffes escamotables.

Suivant un second mode de réalisation particulièrement avantageux lorsque la profondeur d'utilisation devient relativement importante, le dispositif comporte (Fig. 7, 8) un ensemble de percussion 1 destiné à être descendu dans un puits ou forage 2, un élément de couplage 3 pour immobiliser l'ensemble de percussion à une profondeur choisie et des moyens moteurs électriques 46 disposés dans un élément tubulaire rapporté fixé à la partie supérieure de l'ensemble de percussion 1.

Celui-ci est relié par un câble électro-porteur 47 à un ensemble de support et de levage 48 disposé en surface. Cet ensemble 48 comporte par exemple un derrick 49, un système de treuils 50 sur lequel s'enroule le câble électro-porteur 47 et un générateur électrique 51 pour l'alimentation électrique du câble.

Comme dans le mode de réalisation des figures 2 à 6, le dispositif comporte un corps cylindrique 12 terminé à une première extrémité par une paroi 13 pourvue d'une ouverture axiale 14 et fermé à son extrémité opposée par une pièce rapportée 15 constituant l'élément-cible. Une tige filetée 16 solidaire de l'élément-cible en translation, à une première de ses extrémités, traverse l'ouverture axiale 14 à son extrémité opposée et vient se raccorder à l'axe 52 des moyens moteurs électriques supérieurs 46. Sur la tige filetée 16 vient se visser un écrou 21 que des glissières 22 fixées à la paroi intérieure du corps suivant des génératrices, empêchent de tourner. La rotation de la tige filetée dans un sens et dans le sens opposé fait monter ou descendre l'écrou.

Au-dessus de l'écrou, du côté de celui-ci opposé à l'élément-cible, est disposée une masse 24 déplaçable le long de la tige filetée, par l'ascension de l'écrou le long de celle-ci. De la même manière un ressort 28 comprimé lorsque la masse s'éloigne de l'élément-cible, vient appliquer une accélération supplémentaire à la masse lors de sa chute.

Ce mode de réalisation diffère essentiellement du précédent par les moyens d'immobilisation de la masse en position haute, par intermittence. Ces moyens comportent un plateau magnétique d'un type connu 51 comprenant des aimants permanents et des bobinages électriques tels que l'application d'un courant électrique à ces bobinages, démagnétise les aimants, et annule la force de retenue exercée par le plateau. Ce plateau qui comporte un passage central 52 pour la tige filetée 16 et le ressort 28, est fixé à la paroi du corps 12 au voisinage de la position haute de la masse. Des câbles électriques 53 relient le plateau magnétique 51 à l'intérieur du compartiment 46 où ils sont connectés au câble électro-porteur 47 (Fig. 7). Le dispositif comporte, comme le mode de réalisation précédent, un élément de couplage déformable 41 et d'un élément d'ancrage 42 du type à commande électrique, de manière à pouvoir être actionné par une commande électrique appliquée par l'intermédiaire du câble électro-porteur 47.

Le dispositif fonctionne de la manière suivante :

- Par déroulage du treuil 50, on descend le dispositif dans le puits à l'extrémité de son câble électro-porteur 47. Parvenu à la profondeur choisie, on commande l'ancrage à la paroi du puits de l'élément d'ancrage 42 et on actionne les moteurs électriques 46 de manière à faire tourner la tige filetée 16 dans un sens tel que l'écrou 21 monte. La masse 24 est entraînée vers sa position haute où elle vient s'appliquer contre le plateau magnétique qui le maintient.

Les moteurs électriques 46 sont alors commandés de manière à ramener l'écrou 21 jusqu'à sa position basse (représentée sur la figure 8) par rotation de la tige filetée 16.

Le déclenchement de la source sismique est commandé depuis la surface, par application au plateau magnétique 51, de courants de démagnétisation. Ce mode d'immobilisation par intermittence de la masse en position haute permet de connaître avec une grande précision l'instant de déclenchement de la source sismique.

On ne sortirait pas du cadre de l'invention en remplaçant le ressort 28 par tous moyens élastiques équivalents, en particulier un volume gazeux comprimé par la translation de la masse vers sa position de déclenchement, ce volume gazeux étant continu par exemple dans une chambre délimitée par des parois du corps et un piston mobile solidaire de la masse. De la même façon, on pourra remplacer les aimants permanents démagnétisables par des électro-aimants activés par application d'un courant électrique.

## Revendications

1. Dispositif pour engendrer dans un puits ou forage des ondes acoustiques par percussion d'une masse (24) chutant sur un élément-cible (15) couplé avec la paroi du puits (2), comportant un corps allongé (12) auquel est fixé l'élément-cible, le corps assurant le guidage de la masse entre une position d'impact en contact avec l'élément-cible et une position de relevage d'où la chute est déclenchée, des moyens de liaison (4) pour relier le corps à la surface, des moyens d'ancrage escamotables (3) pour coupler par intermittence le dispositif avec la paroi du puits, des moyens pour translater la masse entre sa position d'impact et sa position de relevage, ces moyens comportant une tige filetée (16) disposée suivant l'axe du corps, des moyens pour faire tourner la tige filetée alternativement dans un sens et dans le sens opposé, et des moyens pour appliquer à la masse une force élastique qui vient s'ajouter à la force de pesanteur, caractérisé en ce que les moyens pour translater la masse comportent un écrou (21) immobilisé en rotation qui est disposé sous la masse (24) et coopère avec la tige filetée (16).

2. Dispositif selon la revendication 1, caractérisé en ce que les moyens pour faire tourner la tige filetée comportent une colonne rigide reliant la tige filetée à des moyens moteurs (10) disposés en surface.

3. Dispositif selon la revendication 1, caractérisé en ce que les moyens pour faire tourner la tige filetée (16) comportent des moyens moteurs (46) assujettis au corps et un câble électro-porteur (47) coopérant avec un système de levage (50) pour descendre le dispositif dans le puits et commander les moyens moteur pour la mise en rotation de la tige filetée.

4. Dispositif selon la revendication 1, caractérisé en ce que les moyens pour appliquer à la masse une force qui vient s'ajouter à la force de pesanteur comportent des moyens élastiques (28) comprimés par le déplacement de la masse vers sa position de relevage.

5. Dispositif selon la revendication 4, caractérisé en ce que les moyens élastiques comportent un ressort (28) logé à l'intérieur du corps (12).

6. Dispositif selon la revendication 4, caractérisé en ce que les moyens élastique comportent une masse gazeuse comprimée par la translation de la masse vers sa position de déclenchement.

7. Dispositif selon la revendication 1, caractérisé en ce qu'il comporte des moyens d'immobilisation de la masse en position de relevage, lesdits moyens étant déclenchés par le retour de l'écrou (21) au voisinage de la position d'impact de la masse.

8. Dispositif selon la revendication 1, caractérisé en ce que les moyens d'immobilisation comportent au moins une barre (31) déplaçable radialement pourvue d'une encoche (35) pour le blocage de la masse dans sa position de relevage et d'une embase élargie (36) sur laquelle l'écrou vient s'appuyer, au voisinage de la position d'impact de la masse.

9. Dispositif selon la revendication 1, caractérisé en ce que l'élément-cible est relié aux moyens d'ancrage par l'intermédiaire de moyens de couplage élastiques adaptés à venir s'appliquer contre les parois du puits.

10. Dispositif selon la revendication 9, caractérisé en ce que les moyens de couplage comportent un tampon (41) réalisé en un matériau élastique.

11. Dispositif selon la revendication 9, caractérisé en ce que les moyens de couplage comportent une enceinte étanche contenant un fluide.

12. Dispositif selon la revendication 1, caractérisé en ce qu'il comporte des moyens magnétiques (51) d'immobilisation de la masse en position de relevage.

## Claims

1. Device for generating sound waves in a shaft or bore hole by the impact of a weight (24) falling onto a target (15) in contact with the surface of the shaft (2), comprising an elongated body (12) to which is fixed the target, the said body guiding the weight between a position of impact in contact with the target and a raised position from which the weight is released and fails, a connecting system (4) for connecting the body to the surface, a retractable anchorage system (3) to intermittently connect the device to the surface of the shaft, a means of moving the weight between its position of impact and its raised position, this system comprising a threaded rod (16) positioned along the axis of the body, a means to rotate the threaded rod alternately in one direction and in the opposite direction and a method for applying, to the weight, an elastic force which is added to the force of gravity, characterised in that the system used to move the weight comprises a nut (21) immobilised in rotation, positioned under the weight (24) and co-operating with the threaded rod (16).

2. Device in accordance with claim 1, characterised in that the system used to rotate the threaded rod comprises a rigid column connecting the threaded rod to motorised units (10) located on the surface (3).

3. Device in accordance with claim 1, characterised in that the system used to rotate the threaded rod (16) comprises motorised units (46) associated with the body and a combined electrical supply and suspension cable (47) co-operating with a lifting system (50) used to lower the device into the shaft and control the motorised units in order to rotate the threaded rod.

4. Device in accordance with claim 1, characterised in that the means used to apply, to the weight, a force which is added to the force of gravity comprises an elastic force (28) which is compressed by the movement of the weight towards its raised position.

5. Device in accordance with claim 4, characterised in that the elastic force comprises a spring (28) located inside the body of the device (12).

6. Device in accordance with claim 4, characterised in that the elastic force comprises a volume of gas compressed by the movement of the weight towards its release position.

7. Device in accordance with claim 1, characterised in that it includes a means of immobilising the weight in the raised position, this being triggered when the nut (21) returns to the approximate position of impact for the weight.

8. Device in accordance with claim 1, characterised in that the means of immobilisation includes at least one bar (31) which is capable of being displaced radially and is provided with a notch (35) for holding the weight in its raised position and an enlarged base (36) which is contacted by the nut in the vicinity of the position of impact for the weight.

9. Device in accordance with claim 1, characterised in that the target is connected to the anchorage system by means of a flexible connecting element designed to contact the surface of the shaft.

10. Device in accordance with claim 9, characterised in that the connecting element comprises a plug (41) made from a flexible material.

11. Device in accordance with claim 9, characterised in that the connecting element comprises a sealed chamber containing a fluid.

12. Device in accordance with claim 1, characterised in that it includes a magnetic system (51) for immobilising the weight in the raised position.

## Patentansprüche

1. Vorrichtung zur Erzeugung akustischer Wellen in einem Schacht oder Bohrloch durch Perkussion einer Masse (24), die auf ein mit der Wandung des Bohrlochs (2) gekoppeltes Targetelement (5) fällt, mit einem länglichen Körper (12), an den das Targetelement befestigt ist, wobei der Körper die Führung der Masse zwischen einer in Kontakt mit dem Targetelement stehenden Schlagstellung und einer angehobenen Stellung sicherstellt, in der der Fall ausgelöst wird, Verbindungsmitteln (4) zur Verbindung des Körpers mit der Fläche, einfahrbaren Verankerungsmitteln (3) um intermittierend die Vorrichtung mit der Bohrlochwandung zu koppeln, Mitteln, um die Masse zwischen ihrer Schlagstellung und ihrer angehobenen Stellung translatorisch zu bewegen, wobei diese Mittel eine längs der Achse des Körpers angeordnete Gewindestange (16) umfassen, Mitteln, um die Gewindestange alternativ in der einen Richtung und in der entgegengesetzten Richtung zur Drehung zu veranlassen und Mitteln, um auf die Masse eine elastische Kraft aufzubringen, die sich der Schwerkraft überlagert, dadurch gekennzeichnet, daß diese Mittel zur Translationsbewegung der Masse eine drehfestgemachte Mutter (21) umfassen, die unter der Masse (24) angeordnet ist und mit der Gewindestange (16) zusammenwirkt.

2. Vorrichtung nach Anspruch 1, dadurch gekennzeichnet. daß die Mittel, die die Gewindestange in Drehung versetzen, eine steife (Bohr)kolonne umfassen, welche die Gewindestange mit an der Oberfläche angeordneten Antriebsmitteln (10) verbindet.

3. Vorrichtung nach Anspruch 1, dadurch gekennzeichnet, daß die Mittel, die die Drehung der Gewindestange (16) veranlassen, Antriebsmittel (46) umfassen, die am Körper befestigt sind und daß ein Elektro-Trägerkabel (47) mit einem Hubsystem (50) zusammenwirkt, um die Vorrichtung in das Bohrloch hinabzulassen und die Antriebsmittel für das Indrehungversetzen der Gewindestange zu steuern.

4. Vorrichtung nach Anspruch 1, dadurch gekennzeichnet, daß die auf die Masse eine sich der Schwerkraft überlagernde Kraft aufbringenden Mittel elastische Mittel (28) umfassen, die durch Bewegung der Masse in ihre angehobene Stellung zusammengedrückt werden.

5. Vorrichtung nach Anspruch 4, dadurch gekennzeichnet, daß die elastischen Mittel eine im Inneren des Körpers (12) gelagerte Feder (28) umfassen.

6. Vorrichtung nach Anspruch 4, dadurch gekennzeichnet, daß die elastischen Mittel eine gasförmige Masse umfassen, die durch die Translation der Masse gegen ihre Auslösestellung komprimiert ist.

7. Vorrichtung nach Anspruch 1, dadurch gekennzeichnet, daß sie Mittel zum Unbeweglichmachen der Masse in angehobener Stellung umfaßt, wobei diese Mittel durch die Rückführung der Mutter (21) in die Nähe der Schlagstellung der Masse ausgelöst sind.

8. Vorrichtung nach Anspruch 1, dadurch gekennzeichnet, daß die Mittel zum Festmachen wenigstens eine radial verschiebbare Stange (31) umfassen, die mit einer Ausnehmung (35) zum Blockieren der Masse in ihrer angehobenen Stellung und einer verbreiterten Basis (36) versehen ist, auf der die Mutter benachbart der Schlagstellung der Masse in Abstützung kommt.

9. Vorrichtung nach Anspruch 1, dadurch gekennzeichnet, daß das Targetelement mit den Verankerungsmitteln vermittels elastischer Kupplungsmittel verbunden ist, die so ausgebildet sind, daß sie sich gegen die Wandung des Bohrlochs legen.

10. Vorrichtung nach Anspruch 9, dadurch gekennzeichnet, daß die Kopplungsmittel einen aus einem elastischen Material hergestellten Puffer (41) umfassen.

11. Vorrichtung nach Anspruch 9, dadurch gekennzeichnet, daß die Kopplungsmittel eine ein Fluid enthaltende dichte Kammer umfassen.

12. Vorrichtung nach Anspruch 1, dadurch gekennzeichnet, daß sie magnetische Mittel (51) zum Festsetzen der Masse in angehobener Stellung umfaßt.

PL.I.4

FIG.1

EP 0 242 262 B1

PL_II_4

FIG.2

FIG.3

FIG.4

EP 0 242 262 B1

FIG.5   PL_III_4   FIG.6

FIG.7

FIG.8